# FASCICULE DE BREVET EUROPEEN

(11) **EP 2 025 915 B1**
(45) Date de publication et mention de la délivrance du brevet: **01.06.2016**
(21) Numéro de dépôt: 08290719.7
(22) Date de dépôt: 21.07.2008
(51) Int. Cl.: F02M 26/24, F02M 26/37

(54) **Procédé pour réintroduire des gaz d'échappement à l'admission d'un moteur à combustion interne et moteur utilisant un tel procédé**
Verfahren zur Rückführung von Abgasen in den Einlass eines Verbrennungsmotors und Motor, bei dem ein solches Verfahren zum Einsatz kommt
Method of re-inserting exhaust gases at the inlet to an internal combustion engine and engine using such a method

(30) Priorité: 14.08.2007 FR 0705844
(43) Date de publication de la demande: 18.02.2009
(73) Titulaire: IFP Énergies nouvelles, 92852 Rueil-Malmaison Cedex (FR)
(72) Inventeur: Gatellier, Bertrand, 78380 Bougival (FR); Soleri, Dominique, 69003 Lyon (FR); Walter, Bruno, 92700 Colombes (FR)

(56) Documents cités:
- EP-A- 1 489 283
- WO-A-2006/074777
- JP-A- 61 098 914
- US-B1- 6 932 063

## Description

La présente invention se rapporte à un procédé pour réintroduire des gaz d'échappement à l'admission d'un moteur à combustion interne et à un moteur utilisant un tel procédé.

Dans les moteurs à combustion interne de ce type, la réintroduction de gaz d'échappement à l'admission permet de réduire, de manière non négligeable, la quantité d'oxydes d'azote (NOx) qui sont rejetés dans l'atmosphère.

Généralement, cette recirculation est réalisée grâce à un circuit, dénommé circuit EGR (Exhaust Gas Recirculation) comprenant une conduite reliant le collecteur d'échappement du moteur à son répartiteur d'admission et une vanne, dite vanne EGR, placée dans cette conduite.

Comme cela est largement connu, afin de pouvoir minimiser le rejet de NOx dans l'atmosphère, ces gaz d'échappement recirculés sont généralement refroidis avant leur introduction à l'admission du moteur. Pour ce faire, un échangeur de chaleur est placé sur la conduite et les gaz d'échappement sont refroidis en le traversant.

Cette disposition de circuit EGR est bien connue de l'homme de métier et est mieux désignée sous le vocable de "EGR externe".

Il est également connu, comme cela est mieux décrit dans les documents WO 2006/018699 et EP 1489283, un "EGR interne", usuellement dénommé IGR pour "Internal Gas Recirculation" ou "Internal Gas Residual", qui permet de réintroduire des gaz d'échappement à l'admission du moteur sans pour cela utiliser un circuit spécifique externe de recirculation de gaz d'échappement.

Pour cela, le moteur à combustion interne comprend un cylindre comportant une chambre de combustion, un moyen d'échappement avec une soupape d'échappement, un collecteur d'échappement, un moyen d'admission avec une soupape d'admission, un répartiteur d'admission, et un échangeur de refroidissement de gaz d'échappement recirculés, ou refroidisseur, placé dans le répartiteur d'admission.

Dans ce type de moteur, les gaz d'échappement sont réintroduits à l'admission pour se mélanger avec l'air frais qui y parvient lors de la phase d'admission du moteur.

Ainsi, lors de la phase d'échappement du moteur durant laquelle la soupape d'échappement est ouverte, la soupape d'admission est également ouverte pendant une durée déterminée. Les gaz d'échappement contenus dans la chambre de combustion sont évacués à la fois vers le collecteur d'échappement et vers le répartiteur d'admission. Dans l'exemple décrit, la fermeture de la soupape d'admission a lieu avant la fin de la phase d'échappement et avantageusement avant la fermeture de la soupape d'échappement. Dans l'exemple illustré par ce document, les gaz d'échappement contenus dans le répartiteur d'admission sont refroidis par le refroidisseur et sont maintenus dans ce répartiteur à la température souhaitée.

Lors de la phase d'admission du moteur, la soupape d'admission s'ouvre à nouveau, sensiblement au moment de la fermeture de la soupape d'échappement. Les gaz d'échappement refroidis qui sont contenus dans le répartiteur et l'air frais y arrivant sont introduits, au travers de la soupape d'admission, dans la chambre de combustion du moteur pour réaliser la suite du cycle de combustion.

Cette disposition, bien que donnant satisfaction, présente néanmoins des inconvénients non négligeables.

En effet, l'introduction des gaz d'échappement recirculés et de l'air frais dans la chambre de combustion ne permet pas d'obtenir un mélange homogène entre ces deux fluides. Ceci a pour effet de perturber la combustion du mélange lors de l'injection de carburant au voisinage de la fin de la phase de compression du moteur.

En outre, lors de la circulation des gaz d'échappement dans le refroidisseur, celui-ci s'encrasse par le dépôt des particules véhiculées par ces gaz. De ce fait, ce refroidisseur perd de sa capacité d'échange en diminuant ainsi sa performance.

De plus, lors de la traversée des gaz d'échappement au travers du refroidisseur, il peut se produire, lors du refroidissement, une condensation de la vapeur d'eau présente dans ces gaz qui est ensuite réintroduite dans le cylindre lors de la phase d'admission en risquant de perturber la combustion du mélange carburé.

De même, il est difficile de contrôler la quantité de gaz d'échappement qui traverse le refroidisseur et une partie non négligeable de ces gaz peut ne pas être refroidie.

La présente invention se propose de remédier aux inconvénients mentionnés ci-dessus grâce à un procédé de réintroduction de gaz d'échappement à l'admission d'un moteur à combustion interne de conception simple.

A cet effet, la présente invention concerne un procédé pour réintroduire des gaz d'échappement à l'admission d'un moteur à combustion interne selon lequel, durant la phase d'échappement du moteur, une partie des gaz d'échappement contenue dans la chambre de combustion du cylindre du moteur est introduite, pour une plage de fonctionnement de ce moteur, dans un premier circuit de circulation de fluide et l'autre partie desdits gaz est évacuée dans un circuit d'échappement, caractérisé en ce que le procédé consiste :
- durant la phase d'admission du moteur, à refroidir les gaz d'échappement introduits dans le circuit de circulation de fluide,
- à mélanger les gaz d'échappement recirculés refroidis avec de l'air frais d'alimentation provenant du circuit d'alimentation du moteur,
- à introduire le mélange gaz d'échappement recirculés/air d'alimentation dans un deuxième circuit de circulation de fluide,
- à refroidir ledit mélange introduit dans le deuxième circuit avant son admission dans la chambre de combustion.

Le procédé peut consister à fermer au moins une partie du circuit de circulation de fluide et à introduire une partie des gaz d'échappement dans ladite partie fermée du circuit pour mettre lesdits gaz sous pression.

Le procédé peut consister à assurer le refroidissement des gaz d'échappement et du mélange par un échangeur de chaleur commun aux deux circuits de circulation de fluide.

L'invention concerne également un moteur à combustion interne comportant au moins un cylindre avec une chambre de combustion, caractérisé en ce qu'il comprend au moins deux moyens d'admission avec des soupapes d'admission, un répartiteur connecté à chaque moyen d'admission, une conduite de sortie reliant chaque répartiteur à un circuit d'alimentation d'air frais, un échangeur de chaleur placé sur les deux conduites de sortie. une zone de jonction des deux conduites de sortie rejoignant le circuit d'alimentation d'air frais et un moyen de vannage porté par l'une des conduites de sortie.

Avantageusement, l'échangeur de chaleur peut être un refroidisseur à double flux.

Le moyen de vannage peut être placé entre le répartiteur et l'échangeur de chaleur.

Le moyen de vannage peut être est placé entre l'échangeur de chaleur et la zone de jonction.

Le moteur peut comprendre des moyens de commande permettant de faire varier les lois de levée d'au moins une des soupapes.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un moteur à combustion interne utilisant le procédé selon l'invention, pendant la phase d'échappement,
- la figure 2 qui est un schéma montrant le moteur de la figure 1 dans une autre étape du procédé selon l'invention et
- la figure 3 qui montre des courbes illustrant les différentes lois de levée des soupapes d'admission et d'échappement du moteur utilisant le procédé selon l'invention.

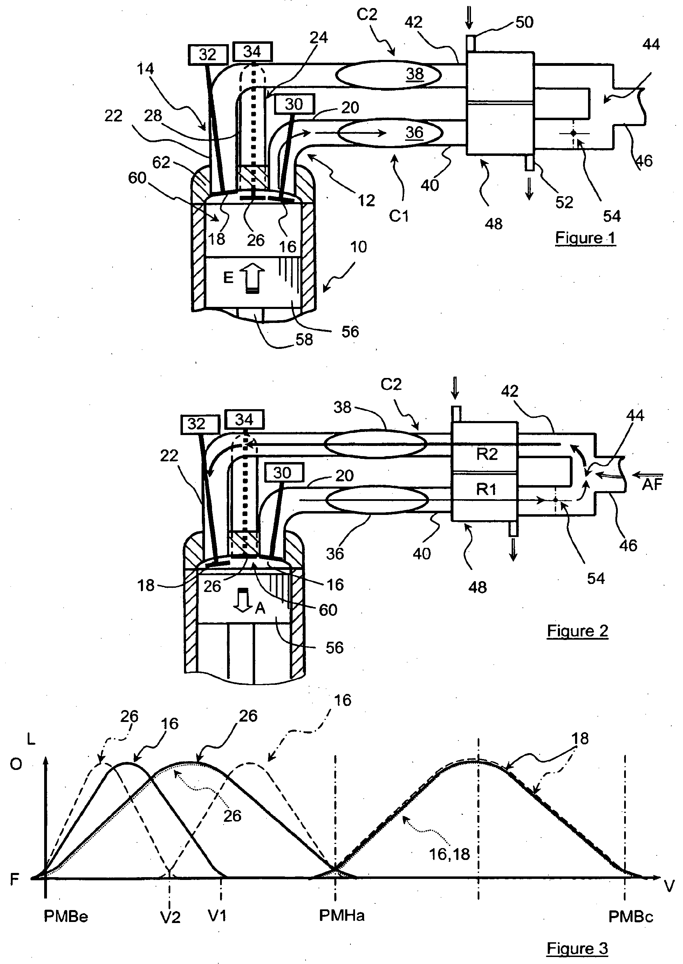

Sur la figure 1, un moteur à combustion interne, du type Diesel à injection directe de carburant, comporte au moins un cylindre 10 comprenant au moins deux moyens d'admission 12, 14 avec une soupape d'admission 16, 18 et une tubulure d'admission 20, 22 pour chaque moyen d'admission. Dans la suite de la description, le moyen d'admission 12 avec la soupape 16 et la tubulure 20 est dénommé moyen d'admission/échappement de façon à mieux le distinguer du moyen d'admission 14 avec sa soupape 18 et sa tubulure 22. Le cylindre comprend également un circuit d'échappement comprenant au moins un moyen d'échappement 24 avec une soupape d'échappement 26, une tubulure d'échappement 28 et un collecteur d'échappement non représenté.

La soupape 16 du moyen d'admission/échappement 12 et éventuellement la soupape d'admission 18 sont commandées en ouverture et en fermeture par des moyens 30, 32 permettant de faire varier les lois de levée de ces soupapes, notamment au niveau de leurs moments d'ouverture et de fermeture, et ce indépendamment l'une de l'autre, comme ceux connus sous la dénomination de VVA (Variable Valve Actuation).

De même, la soupape d'échappement 26 peut être commandée par des moyens 34 permettant de faire varier les lois de levée de cette soupape, comme des moyens de type WA.

Les moyens 30, 32 et 34 sont pilotés par une unité de contrôle, ou calculateur-moteur, (non représenté) que comporte habituellement tout moteur et qui permet notamment de contrôler les lois de levée de ces soupapes, en fonction des conditions de fonctionnement du moteur, ou plages.

Comme mieux visible sur la figure 1, la tubulure d'admission 20 aboutit à un répartiteur 36, dénommé répartiteur d'admission/échappement, et la tubulure 22 aboutit à un autre répartiteur d'admission 38, distinct du répartiteur 36.

Les conduites de sortie 40, 42 de ces répartiteurs aboutissent à une zone de jonction formée par un embranchement 44 qui est relié à un conduit 46 qui fait partie du circuit d'alimentation d'air frais. Cet air frais peut être de l'air à pression ambiante ou de l'air suralimenté, c'est-à-dire comprimé par tous moyens, comme un turbocompresseur.

Un échangeur de chaleur à double flux 48, ou refroidisseur, est placé sur les deux conduites de sortie 40, 42 entre les répartiteurs 36, 38 et l'embranchement 44 de façon à pouvoir refroidir le ou les fluides circulant dans ces conduites. Ce refroidisseur est constamment parcouru, durant le fonctionnement du moteur, par un liquide de refroidissement (ou fluide caloporteur) qui y est introduit, à l'une des extrémités du refroidisseur, par une arrivée 50 et qui en ressort, à l'autre des extrémités de ce refroidisseur, par une évacuation 52. Ce refroidisseur, dit refroidisseur à simple passe, permet ainsi de refroidir tout fluide qui circule dans la conduite 40, en le traversant dans un premier sens, puis de refroidir ce même fluide ou un autre fluide qui circule dans la conduite 42, en le traversant dans le même sens ou un autre sens, généralement opposé au premier sens.

Il peut être remarqué que le fluide de refroidissement introduit dans le refroidisseur par l'arrivée 50 se réchauffe par échange avec le fluide circulant dans le conduit 42 et parvient, avec une température de fluide de refroidissement plus élevée que celle de son arrivée, dans l'autre partie du refroidisseur 48 pour échanger avec le fluide qui circule dans la conduite 40.

Préférentiellement, le liquide de refroidissement utilisé pour le refroidisseur provient d'une dérivation du circuit de refroidissement du moteur ou d'un circuit d'eau basse température.

Avantageusement mais non obligatoirement, une vanne 54 est placée sur la conduite de sortie 40 entre le refroidisseur 48 et l'embranchement 44. Cette vanne peut également être placée entre le répartiteur d'admission/échappement 36 et le refroidisseur 48.

La vanne peut occuper toutes les positions comprises entre sa position de pleine ouverture (en trait pointillé sur la figure) de la conduite de sortie 40 et sa position de pleine fermeture (en trait d'axe) ou être une vanne à deux positions avec une position de pleine ouverture et une position de pleine fermeture.

Ainsi, ce moteur comprend un premier circuit de circulation de fluide C1 avec le moyen d'admission/échappement 12, le répartiteur d'admission/ échappement 36, la conduite de sortie 40 portant la vanne 54 et une partie du refroidisseur 48. Ce moteur comprend aussi un deuxième circuit de circulation de fluide C2 comportant le moyen d'admission 14, le répartiteur d'admission 38 et la conduite de sortie 42 portant l'autre partie du refroidisseur 48.

De plus et comme cela est largement connu, le cylindre 10 comprend un piston 56 mobile en un mouvement translatif alternatif entre une position basse, dite point mort bas (PMB), et une position haute, dite point mort haut (PMH), grâce à une bielle 58 reliée à un maneton d'un vilebrequin (non représentés) que comporte habituellement un tel moteur.

Ce cylindre comprend également une chambre de combustion 60 délimitée par le haut du piston, la paroi du cylindre et la paroi de la culasse 62 en regard du piston. Les moyens d'admission 12, 14 et d'échappement 24 débouchent dans cette chambre de combustion ainsi que tous moyens d'injection de carburant (non représentés) permettant d'obtenir un mélange carburé dans la chambre.

Dans l'exemple décrit en relation avec la présente invention, il est considéré que le moteur fonctionne selon un mode à quatre temps avec une phase d'admission, de compression, de détente et d'échappement.

Ainsi, lorsque le moteur fonctionne dans des conditions qui nécessitent la recirculation d'une partie des gaz d'échappement à l'admission, par exemple celles qui correspondent au fonctionnement avec des faibles ou moyennes charges, le calculateur-moteur contrôle ce moteur pour qu'il fonctionne avec une telle recirculation de gaz d'échappement à son admission.

A partir de la configuration illustrée à la figure 1 et en associant la figure 3 montrant les lois de levée (indiquées en traits forts) des soupapes d'admission 16, 18 et d'échappement 26 qui s'y rattachent, le piston 56 est au voisinage de son point mort bas échappement (PMBe), au début de la phase d'échappement du moteur. Les moyens de commande 30 et 34 sont alors pilotés par le calculateur-moteur pour ouvrir la soupape d'admission 16 du moyen d'admission/échappement 12 et la soupape d'échappement 26. Les gaz d'échappement chauds contenus dans la chambre de combustion 60 sont évacués, sous l'impulsion du mouvement du piston 56 vers le PMH selon la flèche E, à la fois dans au moins une partie du circuit de circulation C1, c'est-à-dire au moins dans la tubulure d'admission 20 au travers de la soupape 16 et le répartiteur d'admission/échappement 36, et, au travers de la soupape d'échappement 26, dans un collecteur d'échappement que comporte habituellement le moteur.

La soupape d'admission 16 se ferme ensuite sous l'impulsion des moyens de commande 30 à un angle de vilebrequin V1 alors que la soupape d'échappement 26 reste ouverte jusqu'à sa fermeture qui a lieu au voisinage de la position de point mort haut admission (PMHa) du piston, comme illustré sur la figure 3.

Bien entendu, le calculateur-moteur contrôle les moyens de commande 30 de la soupape d'admission 16 de façon à ce que la fermeture de cette soupape se réalise à un angle de vilebrequin V1 avant le PMHa d'une manière telle que les gaz d'échappement ne puissent pas aller au-delà du répartiteur d'admission/échappement 36 et, au pire, au-delà de l'embranchement 44.

Bien entendu, durant cette phase d'échappement, la vanne 54 est dans une de ses positions d'ouverture pouvant aller jusqu'à la pleine ouverture.

Ainsi, après la fermeture des soupapes d'admission 16 et d'échappement 26, le piston est au voisinage du PMHa et des gaz d'échappement chauds sont présents dans la tubulure d'admission 20 et dans le répartiteur d'admission/échappement 36 et éventuellement dans la conduite 40 et le refroidisseur 48.

Lors de la phase suivante d'admission du moteur, comme illustrée à la figure 2 et en associant toujours la figure 3, le piston 56 a un mouvement descendant, selon la flèche A, de son PMHa vers son point mort bas compression (PMBc). Au début de cette phase d'admission où le piston est au voisinage de son PMHa, le calculateur-moteur contrôle les moyens de commande des soupapes de façon à ce que la soupape d'admission 16 et la soupape d'échappement 26 restent fermées et que la soupape d'admission 18 s'ouvre.

Sous l'effet du mouvement descendant du piston, une dépression est créée au travers de la soupape d'admission 18 et les gaz d'échappement contenus dans la tubulure d'admission/échappement 20 ainsi que dans le répartiteur d'admission/échappement 36 sont amenés à circuler dans la conduite de sortie 40. Durant cette circulation, les gaz d'échappement traversent le refroidisseur 48 (flèche R1) et aboutissent, en un état refroidi, à l'embranchement 44, la vanne 54 étant en une position de pleine ouverture.

L'air frais qui est admis dans le conduit 46 (flèche AF) parvient à l'embranchement 44 où il se mélange avec les gaz d'échappement refroidis. Ce mélange circule ensuite dans le deuxième circuit de circulation de fluide C2, plus précisément dans la conduite de sortie 42 en traversant le refroidisseur 48 dans un sens (flèche R2) inverse à celui de la traversée des gaz d'échappement dans la conduite 40 pour aboutir au répartiteur d'admission 38.

Dans ce répartiteur, est ainsi présent un mélange d'air frais et de gaz d'échappement qui a été refroidi par passage dans le refroidisseur.

Ceci est particulièrement avantageux dans le cas de l'utilisation d'un air frais qui est un air suralimenté par compression et qui subit une élévation de température lors de cette compression. Cet air suralimenté doit être soumis, par la suite, à un refroidissement pour retrouver toutes les caractéristiques que l'on recherche pour un air comprimé, telle que sa densité.

Le mélange d'air frais et de gaz d'échappement est ensuite dirigé par la tubulure d'admission 22 vers la soupape d'admission 18, qui est en position d'ouverture, pour être introduit dans la chambre de combustion 60. Cette introduction se poursuit jusqu'à la fermeture de cette soupape au voisinage de la position du piston correspondant au PMBc.

A la fermeture de la soupape d'admission, le mélange présent dans la chambre de carburant est quasiment homogène et est à la température désirée pour poursuivre le cycle de fonctionnement du moteur par la phase de compression de ce mélange.

Avantageusement, la vanne 54, telle que mentionnée plus haut, peut être utilisée pour mettre en pression les gaz d'échappement contenus dans la tubulure d'admission, le répartiteur d'admission/échappement 36 et une partie de la conduite 40. Pour cela, au début de la phase d'échappement du moteur, la soupape d'admission 16 du moyen d'admission/échappement 12 et la soupape d'échappement 26 sont ouvertes alors que la vanne 54 est placée dans une position de fermeture (illustrée par un trait d'axe sur la figure 1) de la conduite de sortie 40 en isolant ainsi cette conduite de l'embronchement 44. Sous l'effet conjugué de la pression des gaz d'échappement sortant de la chambre de combustion 60 et du mouvement du piston 56 selon la flèche E, le volume délimité par la tubulure d'admission 20, le répartiteur d'admission/échappement 36 et la partie de la conduite de sortie 40 entre ce répartiteur et la vanne 54 est à une pression plus grande que la pression de l'air d'alimentation dans le conduit 46. C'est donc dans au moins une partie fermée du circuit C1 entre la soupape 16 et la vanne 54 que sont contenus des gaz d'échappement sous pression.

Ainsi, lors de la phase suivante d'admission illustrée à la figure 2, les soupapes d'échappement 26 et d'admission 16 sont dans une position de fermeture, la soupape d'admission 18 s'ouvre et la vanne 54 est actionnée en position d'ouverture (indiquée en trait pointillé sur la figure 2). Sous l'effet de la pression régnant en amont de cette vanne (en considérant le sens de circulation allant de la soupape d'admission/échappement 16 vers l'embranchement 44) associée à la dépression, en aval de cette même vanne, générée par le piston 56 lors de son déplacement selon la flèche A, les gaz d'échappement circulent en direction de l'embranchement 44 en traversant le refroidisseur 48.

Ces gaz d'échappement refroidis se mélangent ensuite avec l'air frais introduit dans le conduit 46 et le procédé se poursuit comme précédemment décrit.

Lors du fonctionnement du moteur sans recirculation de gaz d'échappement, notamment à fortes ou pleines charges, il n'est pas nécessaire d'introduire des gaz d'échappement à l'admission du moteur et le fonctionnement de celui-ci est conventionnel.

Dans ce cas et comme cela est illustré sur la figure 3 pour les lois de levée des soupapes d'admission 16, 18 et d'échappement 26 indiquées en traits pointillés, seule la soupape d'échappement 26 est actionnée pendant la phase d'échappement grâce aux moyens de commande 34. Cette soupape s'ouvre au voisinage du PMBe et se ferme au voisinage du PMHa en permettant ainsi l'évacuation des gaz d'échappement contenus dans la chambre de combustion vers le collecteur d'échappement.

Pendant la phase d'admission, l'une ou l'autre des deux soupapes d'admission 16, 18, et de préférence les deux soupapes sont actionnées entre une position d'ouverture au voisinage du PMHa et une position de fermeture au voisinage du PMBc. Durant l'ouverture de ces deux soupapes d'admission, l'air frais introduit dans le conduit 46 parvient à l'embranchement 44 d'où il se sépare en deux flux, un flux circulant selon le circuit C1 dans la conduite 40 en direction de la soupape d'admission 16 et un autre flux circulant selon le second circuit C2 dans la conduite 42 en direction de la soupape 18. Ces deux flux traversent le refroidisseur 48 selon un même sens et sont refroidis avant de parvenir aux répartiteurs 36, 38. A partir de ces répartiteurs, les flux d'air refroidis circulent dans les tubulures d'admission 20, 22 puis sont introduits dans la chambre de combustion 60 au travers des soupapes d'admission 16, 18.

Grâce à cette disposition, dans le cas où l'air frais est un air suralimenté, celui-ci sera refroidi avant son introduction dans la chambre de combustion. De plus, la circulation d'un air suralimenté sous pression dans un sens contraire à celui de la circulation des gaz d'échappement (sens R1) dans la conduite de sortie 40 permet d'enlever une grande partie des impuretés présentes dans les gaz d'échappement et qui ont adhéré aux éléments constitutifs du refroidisseur en contact avec ces gaz, comme les suies.

De plus, l'invention permet d'utiliser un seul échangeur placé en un même endroit pour assurer à la fois le refroidissement des gaz d'échappement recirculés et de l'air frais suralimenté.

Dans l'exemple décrit ci-dessus pour la recirculation des gaz d'échappement à l'admission du moteur, les soupapes d'échappement 26 et d'admission 16 s'ouvrent sensiblement simultanément au début de la phase d'échappement mais les lois de levée de ces soupapes d'échappement 26 et d'admission 16 peuvent être différentes de celles décrites précédemment. L'essentiel réside dans le fait que l'intervalle entre l'ouverture et la fermeture de la soupape d'admission/échappement 16 se réalise pendant la phase d'échappement du moteur.

Ainsi, comme indiqué par des traits interrompus sur la figure 3, la soupape d'échappement 26 s'ouvre au niveau du PMBe puis se referme à l'angle de vilebrequin V2 en évacuant une partie des gaz d'échappement contenue dans la chambre de combustion vers le collecteur d'échappement. Au voisinage de cet angle V2, la soupape d'admission/échappement 16 s'ouvre puis se referme au voisinage du PMHa avec l'évacuation vers le répartiteur d'admission/échappement 36 des gaz d'échappement encore contenus dans la chambre 60. Pour la phase suivante d'admission du moteur, la soupape d'admission 18 se comporte comme précédemment décrit.

Il est à noter que, pour certaines plages de fonctionnement du moteur, telles que celles pour le fonctionnement du moteur à froid, il peut être nécessaire de réintroduire à l'admission des gaz d'échappement sans qu'ils soient refroidis.

Pour ce faire, lors de la phase d'admission qui suit la phase d'échappement de la figure 1, les deux soupapes 16 et 18 sont ouvertes pendant toute cette phase. Les gaz d'échappement chauds contenus dans la tubulure 20 et dans le répartiteur d'admission/échappement 36 sont introduits dans la chambre de combustion 60 au travers de la soupape d'admission 16 et l'air frais circulant dans le circuit C2, à partir du conduit d'alimentation d'air frais 46, est introduit dans cette chambre au travers de la soupape d'admission 18.

Ainsi, à la fin de la phase d'admission, un mélange stratifié d'air frais et de gaz d'échappement recirculés sera présent dans la chambre.

Grâce à l'invention, il est possible de supprimer ou tout du moins simplifier le circuit EGR conventionnel.

En outre, il n'est plus nécessaire de court-circuiter le refroidisseur dans le cas où l'on souhaite réintroduire des gaz d'échappements chauds à l'admission, notamment pour la plage de fonctionnement du moteur à froid.

De plus, lors du fonctionnement du moteur sans recirculation de gaz d'échappement avec circulation de l'air d'alimentation à la fois dans la conduite 40 et le conduite 42, la vanne 54 peut être utilisée en tant que volet de "swirl" de façon à introduire, dans la chambre de combustion, l'air frais d'une manière telle qu'il soit soumis à un mouvement de rotation autour de l'axe général vertical du cylindre (ou swirl).

De surcroît, le refroidisseur à double flux permet d'éviter ou limiter la condensation de la vapeur d'eau présente dans les gaz d'échappement lorsque ces gaz traversent ce refroidisseur. Le fluide caloporteur utilisé pour le refroidissement des gaz d'échappement parvient à la partie de ce refroidisseur concerné par ce refroidissement à une température plus élevée que celle de son arrivée dans ce refroidisseur. Le refroidissement des gaz d'échappement recirculés et du mélange air/gaz d'échappement recirculés se fait donc progressivement, ce qui évite ou limite la condensation de la vapeur d'eau dans ces gaz et dans ce mélange : d'abord les gaz d'échappement recirculés avec un refroidissement modéré puis dans un deuxième temps le mélange air/gaz d'échappement recirculés avec un refroidissement plus important.

Dans le cas d'un air frais suralimenté, l'invention permet également d'utiliser un turbocompresseur pouvant fonctionner avec une pression d'échappement en amont de la turbine plus petite que la pression d'admission en aval du compresseur.

La présente invention n'est pas limitée à l'exemple décrit mais englobe toutes variantes et tous équivalents.

Notamment, en lieu et place des moyens de commande de type VVA, il peut être utilisé des moyens de commande qui ne comportent aucun arbre à cames. Dans ce cas, un moyen d'actionnement dédié à chaque soupape, comme un actionneur à commande électromagnétique ou hydraulique ou électrohydraulique ou pneumatique ou électropneumatique, permet d'agir directement ou indirectement sur la tige de soupape des soupapes d'admission et d'échappement.

## Revendications

1. Procédé pour réintroduire des gaz d'échappement à l'admission d'un moteur à combustion interne selon lequel, durant la phase d'échappement du moteur, une partie des gaz d'échappement contenue dans la chambre de combustion (60) du cylindre (10) du moteur est introduite, pour une plage de fonctionnement de ce moteur, dans un premier circuit de circulation de fluide (C1) et l'autre partie desdits gaz est évacuée dans un circuit d'échappement, **caractérisé en ce que** le procédé consiste :
- durant la phase d'admission du moteur, à refroidir les gaz d'échappement introduits dans le premier circuit de circulation de fluide (C1),
- à mélanger les gaz d'échappement recirculés refroidis avec de l'air frais d'alimentation (AF) provenant du circuit d'alimentation (46) du moteur,
- à introduire le mélange gaz d'échappement recirculés/air d'alimentation dans un deuxième circuit de circulation de fluide (C2),
- à refroidir ledit mélange introduit dans le deuxième circuit (C2) avant son admission dans la chambre de combustion (60).

2. Procédé selon la revendication 1, **caractérisé en ce qu'**il consiste à fermer au moins une partie du circuit de circulation de fluide (C1) et à introduire une partie des gaz d'échappement dans ladite partie fermée du circuit pour mettre lesdits gaz sous pression.

3. Procédé selon la revendication 1, **caractérisé en ce qu'**il consiste à assurer le refroidissement des gaz d'échappement et du mélange par un échangeur de chaleur (48) commun aux deux circuits de circulation de fluide (C1, C2).

4. Moteur à combustion interne comportant au moins un cylindre (10) avec une chambre de combustion (60), au moins deux moyens d'admission (12, 14) avec des soupapes d'admission (16, 18), un répartiteur (36, 38) connecté à chaque moyen d'admission, une conduite de sortie (40, 42) reliant chaque répartiteur à un circuit d'alimentation d'air frais (46), **caractérisé en ce qu'**il comprend un échangeur de chaleur (48) placé sur les deux conduites de sortie (40, 42), une zone de jonction (44) des deux conduites de sortie (40, 42) rejoignant le circuit d'alimentation d'air frais (46) et un moyen de vannage (54) porté par l'une (40) des conduites de sortie.

5. Moteur à combustion interne selon la revendication 4, **caractérisé en ce que** l'échangeur de chaleur (48) est un refroidisseur à double flux.

6. Moteur à combustion interne selon la revendication 4 ou 5, **caractérisé en ce que** le moyen de vannage (54) est placé entre le répartiteur (36) et l'échangeur de chaleur (48).

7. Moteur à combustion interne selon la revendication 4 ou 5, **caractérisé en ce que** le moyen de vannage (54) est placé entre l'échangeur de chaleur (48) et la zone de jonction (44).

8. Moteur à combustion interne selon la revendication 1, **caractérisé en ce qu'**il comprend des moyens de commande (30, 32, 34) permettant de faire varier les lois de levée d'au moins une des soupapes (16, 18).

## Patentansprüche

1. Verfahren, um Abgase wieder in das Ansaugrohr eines Verbrennungsmotors einzuleiten, bei dem während der Ausstoßphase des Motors ein Teil der Abgase, der in der Brennkammer (60) des Zylinders (10) des Motors enthalten ist, für einen Betriebsbereich dieses Motors in eine erste Fluidzirkulationsleitung (C1) eingeleitet wird, und der andere Teil der Gase in eine Abgasleitung abgeleitet wird, **dadurch gekennzeichnet, dass** das Verfahren darin besteht:
- während der Ansaugphase des Motors die in die erste Fluidzirkulationsleitung (C1) eingeleiteten Gase abzukühlen,
- die abgekühlten rezirkulierten Abgase mit frischer Versorgungsluft (AF), die von der Versorgungsleitung (46) des Motors kommt, zu mischen,
- das Gemisch aus rezirkulierten Abgasen/Versorgungsluft in eine zweite Fluidzirkulationsleitung (C2) einzuleiten,
- das in die zweite Leitung (C2) eingeleitete Gemisch vor seiner Ansaugung in die Brennkammer (60) abzukühlen.

2. Verfahren nach Anspruch 1, **dadurch gekennzeichnet, dass** es darin besteht, mindestens einen Teil der Fluidzirkulationsleitung (C1) zu schließen und einen Teil der Abgase in den geschlossenen Teil der Leitung einzuleiten, um die Gase unter Druck zu setzen.

3. Verfahren nach Anspruch 1, **dadurch gekennzeichnet, dass** es darin besteht, die Abkühlung der Abgase und des Gemisches durch einen Wärmetauscher (48), der beiden Fluidzirkulationsleitungen (C1, C2) gemein ist, zu gewährleisten.

4. Verbrennungsmotor, umfassend mindestens einen Zylinder (10) mit einer Brennkammer (60), mindestens zwei Ansaugmittel (12, 14) mit Ansaugventilen (16, 18), einen Verteiler (36, 38), der an jedes Ansaugmittel angeschlossen ist, eine Ausgangsleitung (40, 42), die jeden Verteiler mit einer Frischluftversorgungsleitung (46) verbindet, **dadurch gekennzeichnet, dass** er einen Wärmetauscher (48) umfasst, der auf den beiden Ausgangsleitungen (40, 42) angeordnet ist, wobei eine Verbindungszone (44) der beiden Ausgangsleitungen (40, 42) die Frischluftversorgungsleitung (46) und eine Drosselklappe (54), die von einer der Ausgangsleitungen (40) getragen wird, verbindet.

5. Verbrennungsmotor nach Anspruch 4, **dadurch gekennzeichnet, dass** der Wärmetauscher (48) ein Kühler mit doppeltem Durchfluss ist.

6. Verbrennungsmotor 4 oder 5, **dadurch gekennzeichnet, dass** die Drosselklappe (54) zwischen dem Verteiler (36) und dem Wärmetauscher (48) angeordnet ist.

7. Verbrennungsmotor nach Anspruch 4 oder 5, **dadurch gekennzeichnet, dass** die Drosselklappe (54) zwischen dem Wärmetauscher (48) und der Verbindungszone (44) angeordnet ist.

8. Verbrennungsmotor nach Anspruch 1, **dadurch gekennzeichnet, dass** er Steuermittel (30, 32, 34) umfasst, die es ermöglichen, die Hubgesetze mindestens eines der Ventile (16, 18) zu variieren.

## Claims

1. A method for reintroducing exhaust gas to the intake of an internal-combustion engine wherein, during the engine exhaust phase, part of the exhaust gas contained in combustion chamber (60) of cylinder (10) of the engine is fed, for an operating range of this engine, into a first fluid circulation circuit (C1) and the other part of said gas is discharged into an exhaust circuit, **characterized in that** the method consists:
- during the engine intake phase, in cooling the exhaust gas fed into first fluid circulation circuit (C1),
- in mixing the cooled recirculated exhaust gas with fresh supply air (AF) coming from engine supply circuit (46),
- in feeding the recirculated exhaust gas/supply air mixture into a second fluid circulation circuit (C2), and
- in cooling said mixture fed into second circuit (C2) prior to allowing it into combustion chamber (60).

2. A method as claimed in claim 1, **characterized in that** it consists in closing at least part of fluid circulation circuit (C1) and in feeding part of the exhaust gas into said closed part of the circuit so as to put said gas under pressure.

3. A method as claimed in claim 1, **characterized in that** it consists in providing cooling of the exhaust gas and of the mixture by a heat exchanger (48) common to the two fluid circulation circuits (C1, C2).

4. An internal-combustion engine comprising at least one cylinder (10) with a combustion chamber (60), at least two intake means (12, 14) with intake valves (16, 18), a distributor (36, 38) connected to each intake means and an outlet pipe (40, 42) connecting each distributor to a fresh air supply circuit (46), **characterized in that** it comprises a heat exchanger (48) arranged on the two outlet pipes (40, 42), a junction zone (44) for the two outlet pipes (40, 42) joining fresh air supply circuit (46) and throttling means (54) carried by one (40) of the outlet pipes.

5. An internal-combustion engine as claimed in claim 4, **characterized in that** heat exchanger (48) is a double-flow cooler.

6. An internal-combustion engine as claimed in claim 4 or 5, **characterized in that** throttling means (54) is arranged between distributor (36) and heat exchanger (48).

7. An internal-combustion engine as claimed in claim 4 or 5, **characterized in that** throttling means (54) is arranged between heat exchanger (48) and junction zone (44).

8. An internal-combustion engine as claimed in claim 4, **characterized in that** it comprises control means (30, 32, 34) allowing the lift laws of at least one of valves (16, 18) to be varied.
